(19) Europäisches Patentamt
European Patent Office
Office européen des brevets

(11) **EP 4 539 331 A1**

(12) **EUROPEAN PATENT APPLICATION**

(43) Date of publication:
**16.04.2025 Bulletin 2025/16**

(21) Application number: **23202593.2**

(22) Date of filing: **10.10.2023**

(51) International Patent Classification (IPC):
**H02P 21/06** (2016.01)      **H02P 21/14** (2016.01)
**H02P 25/22** (2006.01)

(52) Cooperative Patent Classification (CPC):
**H02P 25/22; H02P 21/06; H02P 21/141**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **ABB SCHWEIZ AG**
**5400 Baden (CH)**

(72) Inventor: **Heikkilä, Samuli**
**00380 Helsinki (FI)**

(74) Representative: **Kolster Oy Ab**
**Salmisaarenaukio 1**
**P.O. Box 204**
**00181 Helsinki (FI)**

(54) **METHOD FOR CONTROLLING POWER CONVERTER SYSTEM AND POWER CONVERTER SYSTEM**

(57)    A method for controlling a power converter system and a power converter system comprising a first power converter (10) connected to a first stator winding of an induction motor (30) having a rotor, the first stator winding and a second stator winding, and a second power converter (20) connected to the second stator winding of the induction motor (30), the first power converter (10) being configured to transmit a slip angle estimate to the second power converter (20), and the second power converter (20) being configured to determine a slip angle reference on the basis of the slip angle estimate transmitted from the first power converter (10) and a predetermined phase shift between the second stator winding and the first stator winding and to determine a rotor flux angle estimate on the basis of the determined slip angle reference and a mechanical angle of the rotor.

Fig. 2

EP 4 539 331 A1

**Description**

TECHNICAL FIELD

The present invention relates to method for controlling a power converter system.

BACKGROUND

Multiple winding induction machines are electric machines, such as motors, that have two or more stator windings. Each of the stator windings may be connected to a separate power converter device, one for each winding, which converter devices may be controlled essentially independently. The two or more stator windings have a predetermined phase-shift(s) between them.

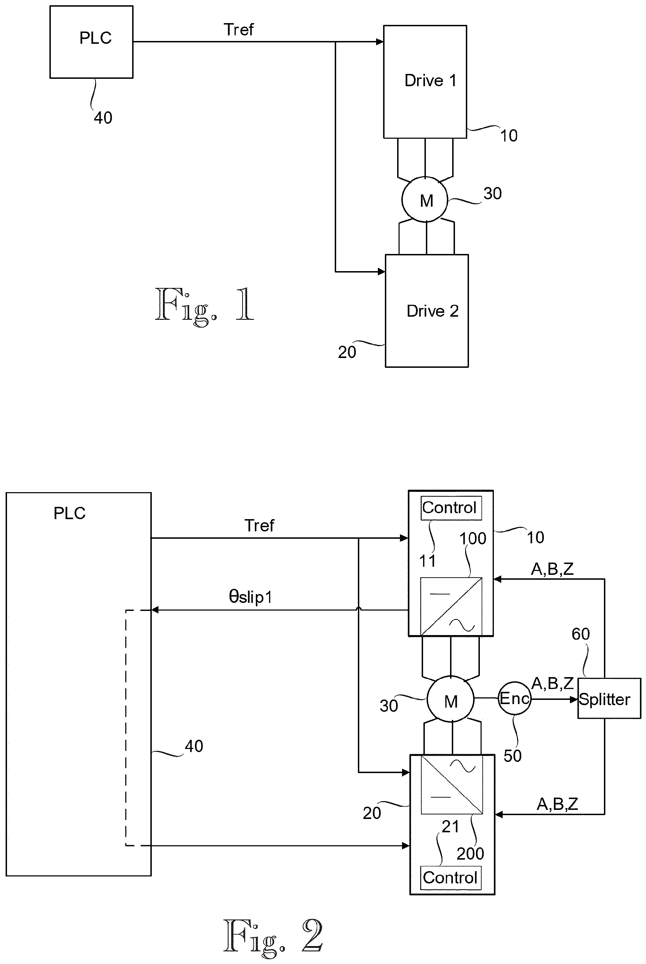

Figure 1 illustrates an example of a configuration in which a three-phase double (dual) winding induction motor 30 is connected to two power converter devices 10, 20 which both comprise an inverter. In the example, the two stator windings can be controlled by the respective two inverters receiving the same torque reference from e.g. a PLC 40 that may control torque and/or speed of the whole induction motor.

A challenge related to the exemplary configuration is how to get field orientations synchronized between the two inverters e.g. such that fundamental components of winding currents are in balance and correctly phase-shifted to match with the actual phase-shift between the windings. In particular, in case of induction machines, it may be challenging to synchronize the orientation even if a mechanical position of the machine rotor was provided for both inverters. This is due to the slip angle that may change all the time if the machine is loaded. Thus, the position of the machine rotor, e.g. from a rotary encoder coupled with the rotor, cannot be used as such for field orientation synchronization.

A possible solution is to send the field orientation, or rotor flux, angle directly from one converter device acting as a master to another converter device acting as a follower. However, a problem related to such a solution is that a high bandwidth communication link would be needed between the converter devices at least for high-speed operation, and such a high bandwidth communication link may not be readily available and/or might be difficult or expensive to arrange in practice. Moreover, even if a fast communication link was available between the converter devices, sending an extra fast signal through it might significantly reduce the bandwidth available for other signals in the communication link and/or increase CPU load in the converter devices and system elements therebetween providing the communication link, which is not desirable.

BRIEF DESCRIPTION

An object of the present invention is thus to provide a method and an apparatus for implementing the method so as to overcome the above problems or at least to alleviate the problems. The objects of the invention are achieved by a method and a power converter system which are characterized by what is stated in the independent claims. The preferred embodiments of the invention are disclosed in the dependent claims.

The invention is based on the idea of determining, in a first power converter, a first slip angle estimate of the rotor on the basis of an estimated rotor flux and the mechanical angle of the rotor and transmitting the determined first slip angle estimate from the first power converter to each second power converter, whereby in each second power converter a slip angle reference can be determined on the basis of the first slip angle estimate transmitted from the first power converter and a predetermined phase shift between the second stator winding in question and the first stator winding, and a rotor flux angle estimate can then be determined on the basis of the determined slip angle reference and the mechanical angle of the rotor.

An advantage of the solution of the invention is that since the slip angle usually changes quite slowly, the transmission thereof consumes less bandwidth from the communication link between the converter devices, and thus does not necessarily require a high-speed communication link between the converter devices.

BRIEF DESCRIPTION OF THE DRAWINGS

In the following the invention will be described in greater detail by means of preferred embodiments with reference to the accompanying drawings, in which

Figure 1 illustrates an example of a system;
Figure 2 illustrates an example of a system according to an embodiment;
Figure 3 illustrates an example of a power converter system according to an embodiment;
Figure 4 illustrates a block diagram according to an embodiment;
Figure 5 illustrates an example of a power converter system according to an embodiment;

Figure 6 illustrates a block diagram according to an embodiment;
Figure 7 illustrates an example of a power converter system according to an embodiment; and
Figure 8 illustrates a block diagram according to an embodiment.

DETAILED DESCRIPTION

The following embodiments are exemplary. Although the description may refer to "an", "one", or "some" embodiment(s) in several locations, this does not necessarily mean that each such reference is to the same embodiment(s), or that the feature only applies to a single embodiment, for example. Single features of different embodiments may also be combined to provide other embodiments. Different embodiments and examples may be described below using single units, models and equipment, without restricting the embodiments/examples to such a solution. Generally, all terms and expressions used should be interpreted broadly and they are intended to illustrate, not to restrict, the embodiments. The figures only show components necessary for understanding the various embodiments. The number and/or configuration of the various elements, and generally their implementation, could vary from the examples shown in the figures, for instance. It should be noted that the use of the embodiments described herein is not limited to devices or systems employing any specific fundamental frequency or any specific voltage level, for example.

The various embodiments described herein are generally applicable to and in connection with various power converter devices and systems thereof. An example of a power converter device (apparatus) is an electric drive, which herein generally refers to an electronic device, which may be used to regulate the performance of an electric motor, for example. An electric drive (AC drive, variable frequency drive, variable speed drive) may control the power, frequency and/or current supplied to the motor, for instance. One or more electric drives and an electric motor controlled by the one or more electric drives may form an electric drive system. An electric drive may comprise one or more electric power converter units or modules, such as rectifiers, inverters and/or frequency converters, for example, which may comprise various power semiconductor devices. Herein term 'inverter' generally refers to an electronic device or circuitry that is able to convert direct current (DC) to alternating current (AC). An example of the inverter is a semiconductor bridge implemented by means of controllable semiconductor switches, such as IGBTs (Insulated-Gate Bipolar Transistor) or FETs (Field-Effect Transistor), which are controlled according to a modulation or control scheme used. The control of an electric motor may be implemented by means of the electric drive in such a manner that the motor implements a desired speed and/or torque instruction, for example. Examples of control methods for electric drives include flux vector control and direct torque control, for example.

According to an embodiment, a power converter system comprises a first power converter configured to be connected to a first stator winding to control the first stator winding of an induction motor having a rotor, the first stator winding and at least one second stator winding, wherein the first stator winding and the at least one second stator winding are multi-phase windings. The power converter system further comprises at least one second power converter configured to be connected to a respective second stator winding to control the respective second stator winding of the induction motor.

Figure 2 illustrates an example of a system according to an embodiment. Figure 2 is a simplified block diagram of an exemplary system showing some equipment (e.g. apparatuses, devices, nodes) and functional entities, whose implementation and/or number and/or configuration may differ from what is shown in the example of Figure 2. The actual physical connections between the various elements may vary from the example shown. Such a system may also comprise other equipment, functional entities and/or structures, for example. Also e.g. any communications protocols used may vary and may depend on the system characteristics, for instance. The exemplary system comprises a first (master) power converter 10 and one second (follower) power converter 20. The exemplary system further comprises an induction motor 30, which has two three-phase stator windings. The two stator windings have a predetermined phase shift between them. The first power converter 10 is connected to the first stator winding of the induction motor 30 and the second power converter 20 is connected to the second stator winding of the induction motor 30. According to an embodiment, the first power converter 10 and the second power converter 20 both comprise at least an inverter 100, 200, wherein an output of the inverter 100 of the first power converter 10 may be connected to the first stator winding of the induction motor 30, i.e. to the three phases thereof, and an output of the inverter 200 of the second power converter 20 may be connected to the second stator winding of the induction motor 30, i.e. to the three phases thereof. The figure also shows a first control arrangement 11, which may be configured to control the operation of the first power converter 10 and components thereof, such as the inverter 100 thereof, for example, and a second control arrangement 21, which may be configured to control the operation of the second power converter 20 and components thereof, such as the inverter 200 thereof, for example. The first control arrangement 11 and/or the second control arrangement 21 may comprise one or more physical units, for example, and may be configured to perform one or more of the functionalities of any of the embodiments described herein. The induction motor 30 may be any kind of multiple winding multi-phase induction motor (asynchronous AC motor), such as a squirrel cage rotor induction motor, for example. The number of the stator windings of the induction motor 30 in the example could be more than two with any predetermined phase-shift between the windings and/or the stator windings of the induction motor 30 could have more than three phases, for example. According to an embodiment, when the number of the stator windings of the induction motor 30 is more than two, the system comprises a corresponding number of second (follower) power converters such that there is a respective power converter connected to each one of the stator windings of the induction motor 30.

The exemplary system of Figure 2 further comprises an encoder 50, such as a rotary encoder, which may be connected or coupled, either directly or indirectly, to a rotor shaft of the induction motor 30. The encoder 50 may be configured to provide at least the mechanical angle of the rotor of the induction motor 30, or a quantity indicative thereof, to the first power converter 10 and the second power converter 20, e.g. via a signal splitter unit 60 as illustrated in the example. The encoder 50 may be an incremental encoder, for example, with z-pulses in use and thus providing output signals A, B and Z in a manner known per se. The encoder 50 may also be another type of absolute encoder, for instance. The converter devices 10, 20 thus receive the mechanical angle $\theta$m from the encoder 50. In other words, the same absolute angle is communicated to both (all) converter devices essentially simultaneously, so both (all) receive the same signal from the encoder 50. It should be noted that in the figures mechanical angle $\theta$m is assumed to be converted into an electrical angle by taking into account the pole pair number (i.e. number of poles / 2) of the induction motor 30.

The exemplary system of Figure 2 further shows a connection between the first (master) power converter 10 and the second (follower) power converter 20 via which slip angle $\Theta$slip1 data can be conveyed from the first power converter 10 to the second power converter 20 as will be described in more detail below. While in the illustrated example the connection passes through an exemplary PLC (programmable logic controller) 40, which may also control torque and/or speed of the induction motor 30, e.g. via a torque control signal Tref to the power converter devices 10, 20, it should be noted that such a connection through which slip angle data can be conveyed from the first power converter 10 to the second power converter 20 can be any kind of wired or wireless connection, or a combination thereof employing any suitable communication protocol(s). It is also noted that the converter devices 10, 20 could receive their controls to control the induction motor 30 from another kind of control entity than shown in the exemplary Figure 2, for example.

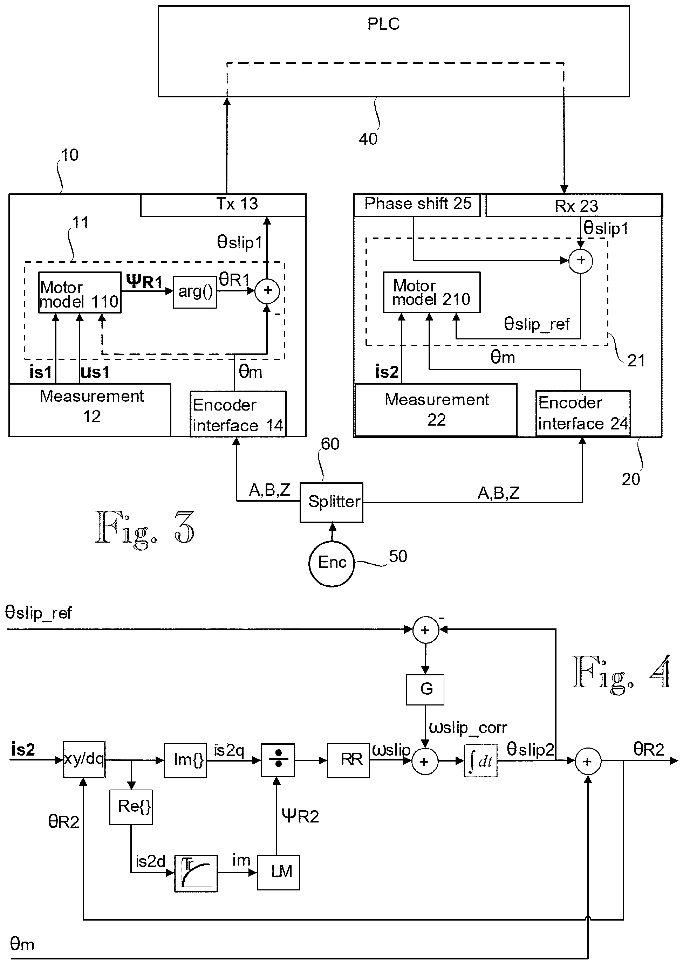

According to an embodiment, a method comprises controlling the first stator winding of the induction motor 30 by the first power converter 10 and controlling each second stator winding of the induction motor 30 by the respective second power converter 20. The method further comprises receiving, in the first power converter 10 and in each second power converter 20, a mechanical angle of the rotor of the induction motor 30. The method further comprises determining, in the first power converter 10, a first slip angle estimate of the rotor on the basis of an estimated rotor flux and the mechanical angle of the rotor of the induction motor 30. The method further comprises transmitting the determined first slip angle estimate from the first power converter 10 to each second power converter 20. The method further comprises, in each second power converter 20, determining a slip angle reference on the basis of the first slip angle estimate transmitted from the first power converter 10 and a predetermined phase shift between the second stator winding in question and the first stator winding, and determining a rotor flux angle estimate on the basis of the determined slip angle reference and the mechanical angle of the rotor. Examples of possible embodiments are given below with reference to Figures 3 to 8. It should be noted that while the examples in Figures 3 to 8 show only one second (follower) converter device 20, there could be any number of such second (follower) converter devices each connected to a respective second winding of the induction motor 30. In such a case the functionality of the single second converter device 20 illustrated in Figures 3 to 8 could be implemented in each such second converter device separately. It should be noted that the exemplary figures only show functionality relevant for implementing and understanding the various embodiments.

Figure 3 shows an example of a power converter system comprising the first (master) power converter 10 and the second (follower) power converter 20 as well as the encoder 50, splitter 60 generally corresponding to the system of Figure 2. For the sake of clarity, the induction motor 30, nor any inverter units 100, 200 are not shown in Figure 3. In the example, the first (master) power converter 10 comprises the control arrangement 11, and shows some of its possible functionality in more detail such as the motor model block 110. Term 'motor model' herein generally refers to a computational motor model which can determine or estimate information relating to the rotation of the motor, such as motor speed, (electrical) position, torque and/or magnetic flux, by using various measured or otherwise obtained quantities, such as motor current, voltage and/or rotor angle, as source information. Such a motor model block may comprise the functionality of a flux observer, for example. The information determined or estimated by the motor model may then be used in the control of the converter device and the motor connected thereto, such as speed and/or torque control, for example.

In the example, the first (master) power converter 10 further comprises a measuring arrangement 12, which is configured to perform required measurements, or at least to receive measured data from a possible separate measuring unit or units. As an example, the measuring arrangement 12 may measure the motor current, i.e. the stator current $\mathbf{i_{s1}}$ of the first stator connected to the first power converter 10, and/or the motor voltage, i.e. the stator voltage $\mathbf{u_{s1}}$ of the first stator connected to the first power converter 10. Such measurements may be performed from the output of the inverter 100 of the power converter 10 connected to the first stator of the induction motor 30 with suitable current and/or voltage measuring equipment which may be implemented within the power converter device 10, for example. For example, three output phase currents $i_a$, $i_b$, $i_c$ of the inverter 100 can be measured and may be suitably converted from the three-phase abc reference frame into a two-phase representation by a three-phase to two-phase (abc to xy) transformation (Clarke transformation), in a manner known per se, by the measuring arrangement 12. Assuming that the three phase currents $i_a$, $i_b$, $i_c$ are essentially symmetrical, it would be sufficient to measure only two of the three output phase currents of the inverter 100 as the third current can be calculated from the other two. The measuring arrangement 12 can thus output a single (vector) quantity, i.e. the stator current $\mathbf{i_{s1}}$ of the first stator of the induction motor 30. In a similar manner the three output phase voltages $u_a$, $u_b$, $u_c$ of the inverter 100 can be measured by the measuring arrangement 12 and suitably converted from the three-phase abc reference frame into a two-phase representation and output as a single (vector) quantity, i.e. the stator voltage $\mathbf{u_{s1}}$ of the first stator of the induction motor 30.

In the example, the first power converter 10 further comprises a transmitter (Tx) 13, which is configured to send at least slip angle Θslip1 data to one or more second power converter devices. The exemplary first power converter 10 further comprises an encoder interface block 14, which is configured to receive data from the encoder 50 and to extract the mechanical angle θm from the received data, for example. In the example of Figure 3, the second (follower) power converter 20 comprises the control arrangement 21 and shows some of its possible functionality in more detail such as the motor model block 210. Moreover, the second power converter 20 comprises a measuring arrangement 22, which may essentially correspond to the measuring arrangement 12 of the first power converter 10, but which may measure the motor current, i.e. the stator current $\mathbf{i_{s2}}$ of the second stator connected to the second power converter 20, and/or the motor voltage, i.e. the stator voltage $\mathbf{u_{s2}}$ of the second stator connected to the second power converter 20. In the example, the second power converter 20 further comprises a receiver (Rx) 23, which is configured to receive at least slip angle Θslip1 data from the first power converter device 10. The exemplary second power converter 20 further comprises an encoder interface block 24 corresponding to the encoder interface block 14 of the first power converter 10. Moreover, the exemplary second power converter 20 comprises a phase shift block 25 which may provide the (predetermined) value of the phase shift between the second stator connected to the second power converter 20 and the first stator connected to the first power converter 10.

In the example of Figure 3, the motor model block 110 of the first (master) power converter 10 is configured to determine an estimated rotor flux (vector) $\psi_{R1}$. As an example, the motor model block 110 of the first power converter 10 may be configured to determine the estimated rotor flux (vector) $\psi_{R1}$ on the basis of the stator current $\mathbf{i_{s1}}$, the stator voltage $\mathbf{u_{s1}}$ and the mechanical angle θm of the rotor of the induction motor 30. As another example, the motor model block 110 of the first power converter 10 may be configured to determine the estimated rotor flux (vector) $\psi_{R1}$ on the basis of the stator current $\mathbf{i_{s1}}$ and the stator voltage $\mathbf{u_{s1}}$ (i.e. without the mechanical angle θm of the rotor of the induction motor 30).

Then it is possible to calculate the estimated angle θR1 of the estimated rotor flux $\psi_{R1}$ in the stator reference frame in the argument (arg) block. The first slip angle estimate θslip1 may then be determined by subtracting the measured mechanical angle θm from the estimated rotor flux angle θR1 in the first power converter 10. The first slip angle estimate θslip1 is then sent, e.g. via the PLC 40, to the (each) second power converter 20. In the second power converter 20 the winding-to-winding phase shift (between the first winding and the respective second winding of the induction motor 30) provided by block 25 is added to the first slip angle estimate θslip1 which results in a phase shift corrected slip angle reference θslip_ref. Based on the measured mechanical angle of the rotor θm and the slip angle reference θslip_ref, the second power converter's 20 motor model 210 can be corrected to make the field orientations aligned in both power converters 10, 20. This in turn enables e.g. the balancing of the flux- and torque producing dq-components of current vectors as they may be calculated using the same reference frame in both poser converters 10, 20. There are many ways to correct the second power converter's field orientation to correspond to that of the first power converter depending on how the motor model is implemented, for example. More detailed examples are given in the following.

According to an embodiment, the determining, in each second power converter 20, of the rotor flux angle estimate comprises determining the rotor flux angle estimate on the basis of the determined slip angle reference θslip_ref, the mechanical angle of the rotor θm and a stator current of the respective second stator winding $\mathbf{i_{s2}}$.

According to an embodiment, the determining, in each second power converter 20, of the rotor flux angle estimate comprises determining a second slip angle estimate on the basis of the determined slip angle reference and the stator current of the respective second stator winding and determining the rotor flux angle estimate on the basis of the determined second slip angle estimate and the mechanical angle of the rotor. As an example, the control of second power converter 20 may be based on a current model only, i.e. the motor model 210 of the second power converter receives the measured current of the respective second stator winding $\mathbf{i_{s2}}$, the mechanical angle of the rotor θm and the slip angle reference θslip_ref as input signals as shown in the example of Figure 3. This control scheme may incorporate a slip angle estimator which can be corrected based on the slip angle reference directly. Exemplary Figure 4 shows in more detail how the slip correction can be done according to an embodiment.

In the example of Figure 4, which illustrates possible functions performed in the motor model block 210 of the second power converter 20 according to the example of Figure 3, the measured stator current $\mathbf{i_{s2}}$ is converted to the rotor flux reference frame (xy to dq or Park transformation) to result d- and q-axis components is2d, is2q of the current. The d-component is2d is low-pass filtered with a filtering time constant equal to a rotor time constant. The filtering results in a magnetizing current component im which is multiplied by the main inductance Lm to obtain a rotor flux amplitude estimate $\psi$R2. A slip frequency estimate ωslip can be calculated by dividing the q-axis stator current component is2q by the rotor flux amplitude estimate ψR2 and by multiplying the resulting quotient with the rotor resistance RR. The slip frequency estimate ωslip is corrected by a slip frequency correction term ωslip_corr and then further integrated to calculate a second slip angle estimate θslip2. The slip frequency correction term ωslip_corr is calculated proportional to the difference between slip angle reference θslip_ref and the second slip angle estimate θslip2. Therefore, as an example, if the slip angle estimate θslip2 is lagging the slip angle reference θslip_ref, then the slip frequency is increased to catch the reference, and vice versa. Finally, the slip angle estimate θslip2 is added to the mechanical angle of the rotor θm to get a respective rotor flux angle estimate θR2 (i.e. field orientation), which may be used in the Park transformation of the stator current in the second power converter 20. As a result, the second power converter's 20 rotor flux angle estimate θR2 will follow the first power converter's 10 rotor flux angle estimate θR1 as both the slip angle and the mechanical angle are thus synchronized between the power converters 10, 20.

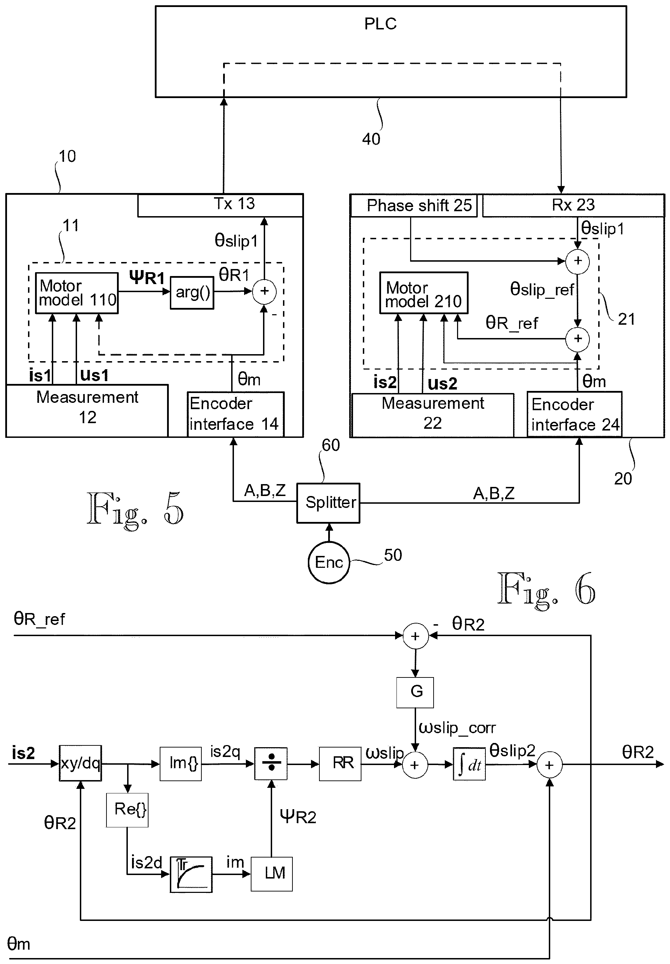

According to an embodiment, the determining, in each second power converter 20, of the rotor flux angle estimate comprises determining a rotor flux angle reference on the basis of the determined slip angle reference and the mechanical angle of the rotor, determining a second slip angle estimate on the basis of the determined rotor flux angle reference and the stator current of the respective second stator winding and determining the rotor flux angle estimate on the basis of the determined second slip angle estimate and the mechanical angle of the rotor. As an example, the field orientations of the power converters 10, 20 could also be synchronized by making corrections based on the rotor flux angle error (instead of slip angle error). This would require only minor modifications to the current model based control presented above. Figures 5 and 6 illustrate an example of an overall concept. Figure 5 shows an example of a power converter system which correspond to that shown in Figure 3 with the difference that in the example of Figure 5, in the second power converter 20 the slip angle reference θslip_ref is added to the measured mechanical angle θm to obtain a rotor flux angle reference θR_ref for the motor model block 210. The motor model block 210 also receives the mechanical angle θm as an input as shown in the figure.

In the example of Figure 6, which illustrates possible functionality performed in the motor model block 210 of the second power converter 20 according to the example of Figure 5, the slip frequency estimate ωslip is corrected based on a difference between the rotor flux angle reference θR_ref and rotor flux angle estimate θR2 to make it aligned with the reference. In other words, the motor model 210 compares the field orientations directly (instead of slip angles). Otherwise, the functionality shown in Figure 6 correspond to that shown in Figure 4 explained above.

According to an embodiment, the determining, in each second power converter 20, of the rotor flux angle estimate comprises determining the rotor flux angle estimate on the basis of the determined slip angle reference, the mechanical angle of the rotor, a stator current of the respective second stator winding and a stator voltage of the respective second stator winding. According to an embodiment, the determining, in each second power converter, of the rotor flux angle estimate comprises determining a rotor flux angle reference on the basis of the determined slip angle reference and the mechanical angle of the rotor and determining the rotor flux angle estimate on the basis of the determined rotor flux angle reference, the stator current of the respective second stator winding and the stator voltage of the respective second stator winding.

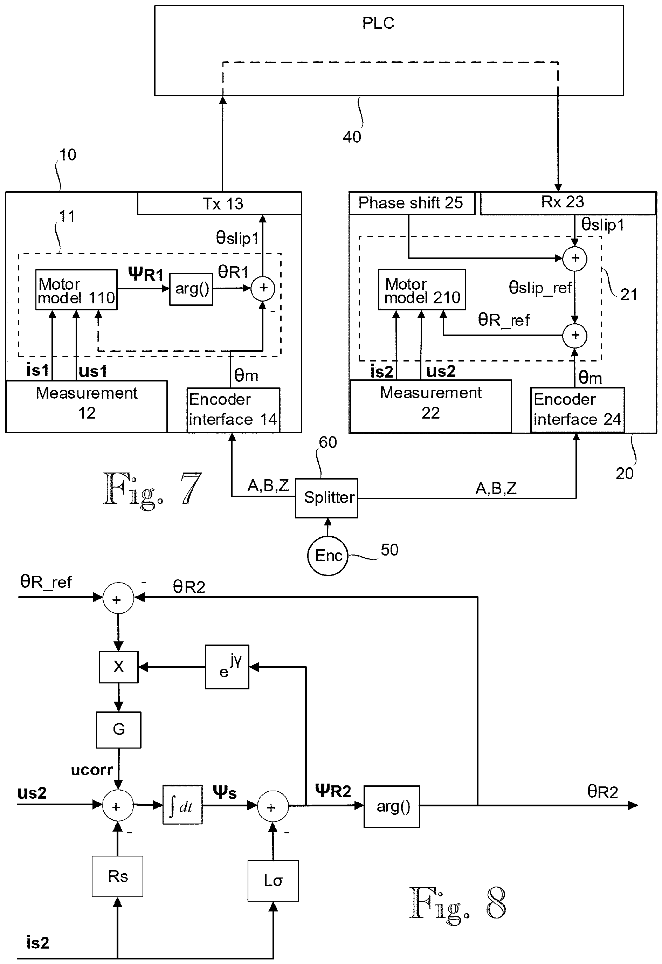

In the examples of Figures 3-6 described above, the field orientation synchronization concept is generally based on the current model. However, it could also be implemented for a generally voltage model based flux observer using the motor voltage as an input signal instead of a mechanical speed or angle. Unlike in the general concepts illustrated in Figures 3-6, such a control scheme does not need to have separate slip angle and flux amplitude estimators, for example. Instead, the rotor flux can be estimated directly as a vector which can be corrected to make it aligned with the rotor flux angle reference θR_ref. This means that only the stator voltage $\mathbf{u_{s2}}$ and the stator current $\mathbf{i_{s2}}$ of the second stator connected to the second power converter 20 and the rotor flux angle reference θR_ref could be used as inputs to the second power converter's 20 motor model block 210 as illustrated in the example of Figure 7. The system of Figure 7 otherwise essentially corresponds to the examples shown in Figures 3 and 5 explained above.

In the example of Figure 8, which illustrates possible functionality performed in the motor model block 210 of the second power converter 20 according to the example of Figure 7, the stator flux can be estimated using the following voltage model equation (with a voltage correction explained below):

$$\boldsymbol{\psi}_s = \int (\boldsymbol{u}_{s2} - R_s \boldsymbol{i}_{s2} + \boldsymbol{u}_{corr})\, dt, \qquad (1)$$

where

$\psi_s$ = stator flux estimate
$\boldsymbol{u}_{s2}$ = stator voltage of the second stator connected to the second power converter 20
$\boldsymbol{i}_{s2}$ = stator current of the second stator connected to the second power converter 20
$\boldsymbol{u}_{corr}$ = voltage correction term
$R_s$ = stator resistance of the second stator connected to the second power converter 20

The estimated rotor flux $\psi_{R2}$ can be calculated in the second power converter 20 by subtracting the leakage flux (i.e. product of a leakage inductance $L_\sigma$ and the stator current) from the said stator flux estimate as follows:

$$\boldsymbol{\psi}_{R2} = \boldsymbol{\psi}_s - L_\sigma \boldsymbol{i}_{s2} \qquad (2)$$

The bold symbols here denote vector quantities; thus the rotor flux estimate $\psi_{R2}$ has both amplitude $\psi_{R2}$ and angle $\theta R2$ which can be corrected through the stator flux by making small corrections to the voltage being integrated in equation 1. The magnitude of the corrections may be proportional to a correction gain G and the difference between the rotor flux angle reference $\theta R\_ref$ and the rotor flux angle estimate $\theta R2$. The correction angle $\gamma$ may be calculated relative to the estimated rotor flux angle $\theta R2$ so that the actual voltage correction is:

$$\boldsymbol{u}_{corr} = G\big(\theta_{R\_ref} - \theta_{R2}\big)e^{j\gamma} \qquad (3)$$

G and $\gamma$ are parameters which may be suitably chosen to preferably keep the model stable and the angle error $\theta R\_ref$ - $\theta R2$ closed to zero in all operation points, for example.

It should be noted that there are essentially no restrictions on how the first power converter's 10 motor model 110, or any corresponding functionality therein, is implemented as only the estimated rotor flux angle $\theta R1$ is taken from the motor model 110 to calculate the first slip angle estimate $\theta slip1$ which is then sent as a reference signal to the second power converter(s) 20. Thus, the motor model 110 of the first power converter 10 as such could be implemented in many ways such as using closed-loop or open-loop vector control schemes taking voltage, current and/or speed (or the mechanical angle of the rotor (shaft), the speed representing the rate of change of the mechanical angle with respect to time) as inputs to the model, for example. In open-loop case, only voltage and current may be needed whereas closed-loop operation could be based on just current and speed, for instance. The second power converter's 20 possibly existing motor model 210, or any corresponding functionality or entity within the control arrangement 21 of the second power converter 20, may be supplemented according to any one of the embodiments described herein.

According to an embodiment, the rotor flux angle estimate(s) $\theta R2$ determined in the second power converter(s) 20 according to any one of the embodiments described herein may be used, in each second power converter 20, for controlling the respective second stator winding of the induction motor 30. As an example, the rotor flux angle estimate $\theta R2$ may be used in the second power converter 20 to transform various quantities, such as current and/or voltage quantities, between different reference frames in a manner known per se, for example. Examples of such transformations include e.g the Park transformation and inverse (reverse) Park transformation as well as the direct-quadrature-zero (abc to dq) transformation and the inverse thereof.

According to an embodiment, a power converter system comprises a first power converter configured to be connected to a first stator winding to control the first stator winding of an induction motor having a rotor, the first stator winding and at least one second stator winding, wherein the first stator winding and the at least one second stator winding are multi-phase windings; and at least one second power converter configured to be connected to a respective second stator winding to control the respective second stator winding of the induction motor. The first power converter comprises means configured to receive a mechanical angle of the rotor of the induction motor, means configured to determine a first slip angle estimate of the rotor on the basis of an estimated rotor flux and the mechanical angle of the rotor, and means configured to transmit the determined first slip angle estimate to the at least one second power converter. The at least one second power converter comprises means configured to receive the mechanical angle of the rotor of the induction motor, means configured to receive the determined first slip angle estimate from the first power converter, means configured to determine a slip angle reference on the basis of the first slip angle estimate received from the first power converter and a predetermined phase shift between the respective second stator winding and the first stator winding and means configured to determine a rotor flux angle estimate on the basis of the determined slip angle reference and the mechanical angle of the rotor.

The first control arrangement 11 and/or the second control arrangement 21 or other means for implementing at least part of the functionality according to any one of the embodiments herein, or a combination thereof, may be implemented as one physical unit or as two or more separate physical units that are configured to implement the functionality. Herein the term 'unit' generally refers to a physical or logical entity, such as a physical device or a part thereof or a software routine. The first control arrangement 11 and/or the second control arrangement 21 or other means for implementing at least part of the functionality according to any one of the embodiments herein may be implemented at least partly by means of one or more computers or corresponding digital signal processing (DSP) equipment provided with suitable software, for example. Such a computer or digital signal processing equipment preferably comprises at least a working memory (RAM) providing storage area for arithmetical operations, and a central processing unit (CPU), such as a general-purpose digital signal processor. The CPU may comprise a set of registers, an arithmetic logic unit, and a control unit. The CPU control unit is controlled by a sequence of program instructions transferred to the CPU from the RAM. The CPU control unit may contain a number of microinstructions for basic operations. The implementation of microinstructions may vary depending on the CPU design. The program instructions may be coded by a programming language, which may be a high-level programming language, such as C, Java, etc., or a low-level programming language, such as a machine language, or an assembler. The computer may also have an operating system which may provide system services to a computer program written with the program instructions. The computer or other apparatus implementing the various embodiments, or a part thereof, may further comprise suitable input means for receiving e.g. measurement and/or control data, and output means for outputting e.g. control or any other data, such as the determined thermal load. It is also possible to use a specific integrated circuit or circuits, such as application-specific integrated circuits (ASIC), digital signal processing devices (DSPD), programmable logic devices (PLD), field-programmable gate arrays (FPGA) and/or discrete electric components and devices for implementing the functionality according to any one of the embodiments.

Many electric devices, such as electric power converters, and components thereof may comprise processors and memory that may be utilized in implementing the functionality according to the various embodiments described herein. Thus, at least some modifications and configurations possibly required for implementing an embodiment could be performed as software routines, which may be implemented as added or updated software routines. If at least part of the functionality of any of the embodiments is implemented by software, such software may be provided as a computer program product comprising computer program code which, when run on a computer, causes the computer or corresponding arrangement to perform the functionality according to the embodiments as described herein. Such a computer program code may be stored or generally embodied on a computer readable medium, such as suitable memory, e.g. a flash memory or an optical memory, from which it is loadable to the unit or units executing the program code. In addition, such a computer program code implementing any of the embodiments may be loaded to the unit or units executing the computer program code via a suitable data network, for example, and it may replace or update a possibly existing program code. An embodiment may provide a computer program embodied on any client-readable distribution/data storage medium or memory unit(s) or article(s) of manufacture, comprising program instructions executable by one or more processors/computers, which instructions, when loaded into an apparatus, constitute the monitoring arrangement, or any corresponding unit or an entity providing corresponding functionality, or at least part of the corresponding functionality. Programs, also called program products, including software routines, program snippets constituting "program libraries", applets and macros, can be stored in any medium and may be downloaded into an apparatus. In other words, each or some or one of the possible units/sub-units and/or algorithms for one or more functions/operations described above, for example by means of any of Figures 1 to 8 and any combination thereof, may be an element that comprises one or more arithmetic logic units, a number of special registers and control circuits.

It will be obvious to a person skilled in the art that, as the technology advances, the inventive concept can be implemented in various ways. Further, it is clear to a person skilled in the art that the described exemplary embodiments may, but are not required to, be combined with other exemplary embodiments in various ways. The invention and its embodiments are not limited to the examples described above but may vary within the scope of the claims. If any of the exemplary embodiments and/or features described herein should not fall under the scope of the independent claims, those are to be interpreted as examples useful for understanding various embodiments of the invention.

**Claims**

1.  A method for controlling a power converter system, which system comprises:

    an induction motor having a rotor, a first stator winding and at least one second stator winding, wherein the first stator winding and the at least one second stator winding are multi-phase windings; and
    a first power converter connected to the first stator winding and, for each second stator winding, a respective second power converter connected to the second stator winding,
    the method comprising:

    controlling the first stator winding of the induction motor by the first power converter;
    controlling each second stator winding of the induction motor by the respective second power converter;
    receiving, in the first power converter and in each second power converter, a mechanical angle of the rotor of the induction motor;
    determining, in the first power converter, a first slip angle estimate of the rotor on the basis of an estimated rotor flux and the mechanical angle of the rotor;
    transmitting the determined first slip angle estimate from the first power converter to each second power converter; and
    in each second power converter:

determining a slip angle reference on the basis of the first slip angle estimate transmitted from the first power converter and a predetermined phase shift between the second stator winding in question and the first stator winding; and

determining a rotor flux angle estimate on the basis of the determined slip angle reference and the mechanical angle of the rotor.

2. A method as claimed in claim 1, wherein the determining, in each second power converter, of the rotor flux angle estimate comprises determining the rotor flux angle estimate on the basis of the determined slip angle reference, the mechanical angle of the rotor and a stator current of the respective second stator winding.

3. A method as claimed in claim 2, wherein the determining, in each second power converter, of the rotor flux angle estimate comprises:

determining a second slip angle estimate on the basis of the determined slip angle reference and the stator current of the respective second stator winding; and

determining the rotor flux angle estimate on the basis of the determined second slip angle estimate and the mechanical angle of the rotor.

4. A method as claimed in claim 2, wherein the determining, in each second power converter, of the rotor flux angle estimate comprises:

determining a rotor flux angle reference on the basis of the determined slip angle reference and the mechanical angle of the rotor;

determining a second slip angle estimate on the basis of the determined rotor flux angle reference and the stator current of the respective second stator winding; and

determining the rotor flux angle estimate on the basis of the determined second slip angle estimate and the mechanical angle of the rotor.

5. A method as claimed in claim 1, wherein the determining, in each second power converter, of the rotor flux angle estimate comprises determining the rotor flux angle estimate on the basis of the determined slip angle reference, the mechanical angle of the rotor, a stator current of the respective second stator winding and a stator voltage of the respective second stator winding.

6. A method as claimed in claim 5, wherein the determining, in each second power converter, of the rotor flux angle estimate comprises:

determining a rotor flux angle reference on the basis of the determined slip angle reference and the mechanical angle of the rotor; and

determining the rotor flux angle estimate on the basis of the determined rotor flux angle reference, the stator current of the respective second stator winding and the stator voltage of the respective second stator winding.

7. A method as claimed in any one of claims 1 to 6, wherein the determined rotor flux angle estimate is used, in each second power converter, for controlling the respective second stator winding.

8. A method as claimed in any one of claims 1 to 7, wherein the first stator winding is controlled by the first power converter and each second stator winding is controlled by the respective second power converter according to a common torque reference.

9. A power converter system comprising:

a first power converter configured to be connected to a first stator winding to control the first stator winding of an induction motor having a rotor, the first stator winding and at least one second stator winding, wherein the first stator winding and the at least one second stator winding are multi-phase windings; and

at least one second power converter configured to be connected to a respective second stator winding to control the respective second stator winding of the induction motor,

wherein the first power converter comprises:

means configured to receive a mechanical angle of the rotor of the induction motor;

means configured to determine a first slip angle estimate of the rotor on the basis of an estimated rotor flux and the mechanical angle of the rotor; and
means configured to transmit the determined first slip angle estimate to the at least one second power converter; and
wherein the at least one second power converter comprises:

means configured to receive the mechanical angle of the rotor of the induction motor;
means configured to receive the determined first slip angle estimate from the first power converter;
means configured to determine a slip angle reference on the basis of the first slip angle estimate received from the first power converter and a predetermined phase shift between the respective second stator winding and the first stator winding; and
means configured to determine a rotor flux angle estimate on the basis of the determined slip angle reference and the mechanical angle of the rotor.

10. A system as claimed in claim 9, wherein the means configured to determine the rotor flux angle estimate comprise means configured to determine the rotor flux angle estimate on the basis of the determined slip angle reference, the mechanical angle of the rotor and a stator current of the respective second stator winding.

11. A system as claimed in claim 10, wherein the means configured to determine the rotor flux angle estimate comprise:

means configured to determine a second slip angle estimate on the basis of the determined slip angle reference and the stator current of the respective second stator winding; and
means configured to determine the rotor flux angle estimate on the basis of the determined second slip angle estimate and the mechanical angle of the rotor.

12. A system as claimed in claim 10, wherein the means configured to determine the rotor flux angle estimate comprise:

means configured to determine a rotor flux angle reference on the basis of the determined slip angle reference and the mechanical angle of the rotor;
means configured to determine a second slip angle estimate on the basis of the determined rotor flux angle reference and the stator current of the respective second stator winding; and
means configured to determine the rotor flux angle estimate on the basis of the determined second slip angle estimate and the mechanical angle of the rotor.

13. A system as claimed in claim 9, wherein the means configured to determine the rotor flux angle estimate comprise means configured to determine the rotor flux angle estimate on the basis of the determined slip angle reference, the mechanical angle of the rotor, a stator current of the respective second stator winding and a stator voltage of the respective second stator winding.

14. A system as claimed in claim 13, wherein the means configured to determine the rotor flux angle estimate comprise:

means configured to determine a rotor flux angle reference on the basis of the determined slip angle reference and the mechanical angle of the rotor; and
means configured to determine the rotor flux angle estimate on the basis of the determined rotor flux angle reference, the stator current of the respective second stator winding and the stator voltage of the respective second stator winding.

15. A system as claimed in any one of claims 9 to 14, wherein the system comprises means configured to measure the mechanical angle of the rotor of the induction motor.

16. A system as claimed in any one of claims 9 to 15, wherein the system comprises an induction motor having a rotor, a first stator winding and at least one second stator winding, wherein the first stator winding and the at least one second stator winding are multi-phase windings, wherein the first power converter is connected to the first stator winding of the induction motor and the at least one second power converter is connected to a respective second stator winding of the induction motor.

17. A system as claimed in claim 16, wherein the first power converter comprises a first inverter, wherein an output of the first inverter is connected to the first stator winding of the induction motor, and the second power converter comprises a second inverter, wherein an output of the second inverter is connected to the second stator winding of the induction motor.

Fig. 1

Fig. 2

Fig. 3

Fig. 4

**Fig. 5**

**Fig. 6**

Fig. 7

Fig. 8

| | Europäisches Patentamt<br>European Patent Office<br>Office européen des brevets | **EUROPEAN SEARCH REPORT** | Application Number<br>**EP 23 20 2593** |

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | JUAN M GUERRERO ET AL: "Total Air-gap flux minimization in dual stator winding induction machines",<br>APPLIED POWER ELECTRONICS CONFERENCE AND EXPOSITION, 2008. APEC 2008. TWENTY-THIRD ANNUAL IEEE, IEEE, PISCATAWAY, NJ, USA, 24 February 2008 (2008-02-24), pages 1132-1138, XP031253390,<br>ISBN: 978-1-4244-1873-2<br>* abstract *<br>* page 1232 - page 1234; figure 3 *<br>----- | 1-17 | INV.<br>H02P21/06<br>H02P21/14<br>H02P25/22 |
| A | US 9 287 818 B2 (BALDOR ELECTRIC CO [US]) 15 March 2016 (2016-03-15)<br>* abstract; figures 1-5 *<br>* column 2, line 12 - line 65 *<br>----- | 1-17 | |
| | | | TECHNICAL FIELDS SEARCHED (IPC)<br><br>H02P |

The present search report has been drawn up for all claims

| Place of search | Date of completion of the search | Examiner |
|---|---|---|
| Munich | 26 March 2024 | Zeng, Wenyan |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 20 2593

This annex lists the patent family members relating to the patent documents cited in  the above-mentioned European search report.
The members are as contained in the European Patent Office EDP file on
The European Patent Office is in no way liable for these particulars which are merely given for the purpose of information.

26-03-2024

| Patent document cited in search report | | Publication date | Patent family member(s) | | Publication date |
|---|---|---|---|---|---|
| US 9287818 | B2 | 15-03-2016 | US | 2015381099 A1 | 31-12-2015 |
| | | | WO | 2016003807 A1 | 07-01-2016 |

EPO FORM P0459

For more details about this annex : see Official Journal of the European Patent Office, No. 12/82